(19) Europäisches Patentamt
European Patent Office
Office européen des brevets

(11) **EP 4 040 257 A1**

(12) **EUROPÄISCHE PATENTANMELDUNG**

(43) Veröffentlichungstag:
**10.08.2022 Patentblatt 2022/32**

(21) Anmeldenummer: **22154932.2**

(22) Anmeldetag: **03.02.2022**

(51) Internationale Patentklassifikation (IPC):
**G05D 16/10** (2006.01)

(52) Gemeinsame Patentklassifikation (CPC):
**G05D 16/103**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **05.02.2021 EP 21155435**

(71) Anmelder: **GOK Regler- und Armaturen-Gesellschaft mbH & Co.KG 97340 Marktbreit (DE)**

(72) Erfinder: **SMEENK, Alfons 97297 Waldbüttelbrunn (DE)**

(74) Vertreter: **Vossius & Partner Patentanwälte Rechtsanwälte mbB Siebertstraße 3 81675 München (DE)**

(54) **VORRICHTUNG ZUR VERHINDERUNG EINER RÜCKVERFLÜSSIGUNG EINES FLÜSSIGGASES IN EINEM FLÜSSIGGASLEITUNGSSYSTEM, FLÜSSIGGASLEITUNGSSYSTEM UND FAHRZEUG**

(57) Die Erfindung betrifft eine Vorrichtung (100) zur Verhinderung einer Rückverflüssigung eines Flüssiggases in einem Flüssiggasleitungssystem (300), wobei die Vorrichtung geeignet ist, um mit Flüssiggas mit einem Druck im Bereich zwischen 1 bar und 16 bar, vorzugsweise zwischen 3 bar und 6 bar, zu operieren, aufweisend: einen Körper (102) mit einem Einlass (104), einem Auslass (106) und einem Körperinnenraum (108) sowie einen im Körperinnenraum angeordneten doppelseitig wirkenden Kolben (110). Dabei ist der Kolben im Körperinnenraum zwischen einer ersten Stellung und einer zweiten Stellung verschiebbar, wobei der Kolben in seiner ersten Stellung einen Durchfluss des Flüssiggases vom Einlass zum Auslass verhindert. Weiterhin lässt die Vorrichtung zumindest in einer dritten Stellung des Kolbens zwischen der ersten Stellung und der zweiten Stellung einen Durchfluss des Flüssiggases vom Einlass zum Auslass zu. Weiterhin weist der Kolben eine dem Einlass zugewandte erste Kolbenseite (112) mit einer ersten wirksamen Kolbenfläche F1 (114) und eine dem Auslass zugewandte zweite Kolbenseite (116) mit einer zweiten wirksamen Kolbenfläche F2 (118) auf, wobei die zweite wirksame Kolbenfläche F2 größer ist als die erste wirksame Kolbenfläche F1.

Fig. 1

**Beschreibung**

Die vorliegende Erfindung betrifft Flüssiggasleitungssysteme, vorzugsweise von Fahrzeugen, und insbesondere eine Vorrichtung zur Verhinderung einer Rückverflüssigung eines Flüssiggases in einem Flüssiggasleitungssystem.

Flüssiggas hat die Eigenschaft, sich bei relativ geringem Druck bei Normaltemperatur in den flüssigen Aggregatzustand zu begeben. Beispielsweise nimmt Propan bei 20 °C den flüssigen Aggregatszustand bei ca. 8,4 bar ein und n-Butan bei ca. 2,1 bar. Dies kann unter anderem für die Logistik positive Auswirkungen haben, da Flüssiggas in flüssiger Form in Gasflaschen, Kartuschen oder Tanks aufbewahrt und transportiert werden kann, so dass für die Aufbewahrung und den Transport der Platz- und Energiebedarf geringer als bei einem gasförmigen Energieträger ist.

Die Erfinder der vorliegenden Erfindung kamen zur Erkenntnis, dass die Eigenschaft von Flüssiggas, sich bei relativ geringem Druck bei Normaltemperatur in den flüssigen Aggregatszustand zu begeben, insoweit Probleme bereiten kann, dass das Flüssiggas im Hochdruckbereich des Flüssiggasleistungssystems - z.B. in einem Hochdruckschlauch zwischen der Gasflasche, der Kartusche oder dem Tank - und dem Gasdruckregler, zumindest teilweise wieder den flüssigen Aggregatszustand einnehmen kann. Mit anderen Worten kann es zu einer Rückverflüssigung des Flüssiggases im Flüssiggasleitungssystem kommen. Diese Rückverflüssigung des Flüssiggases im Flüssiggasleitungssystem kann wiederum Schäden und/oder Störungen an der Schlauchleitung und/oder den nachfolgenden Armaturen, z.B. einem Gasdruckregler, des Flüssiggasleitungssystems verursachen.

Aufgabe der Erfindung ist es, die Zuverlässigkeit von Flüssiggasleitungssystemen und/oder deren Komponenten insbesondere in Fahrzeugen zu erhöhen und/oder deren Wartungsanfälligkeit zu verringern. Insbesondere kann eine Aufgabe darin gesehen werden, Schäden im Gasleitungssystem, insbesondere an Schlauchleitung und Armaturen des Gasleitungssystems zu vermeiden. Eine Aufgabe kann auch darin gesehen werden, die Rückverflüssigung von Flüssiggas in einem Flüssiggasleitungssystem zu verhindern. Eine weitere Aufgabe kann darin gesehen werden, Fluidleitungssysteme gegen Schlauchbruch und/oder Schlauchabriss zu sichern.

Diese Aufgaben werden zumindest teilweise durch die Gegenstände des unabhängigen und der nebengeordneten Patentansprüche gelöst. Weitere Ausführungsformen der Erfindung sind in den abhängigen Ansprüchen, der nachfolgenden Beschreibung und den Figuren offenbart.

Unter dem Betriff "Flüssiggas" sind im Rahmen dieser Offenbarung im Allgemeinen Gase aus kurzkettigen Kohlenwasserstoffen wie beispielsweise Propan und Butan sowie deren Gemische zu verstehen, die bei Raumtemperatur (20° C) und geringer Kompression (z. B. < 10 bar) flüssig bleiben. Flüssiggas kann neben Propan und Butan unter anderem auch Propen, Buten, Isobutan und/oder Isobuten sein oder enthalten. Im Rahmen der vorliegenden Offenbarung bezieht sich der Begriff "Gas" durchgehend auf Flüssiggas. Das Flüssiggas ist insbesondere ein brennbares Gas. Das Flüssiggas kann zumindest entlang eines Teils des Leitungssystems im gasförmigen Zustand vorliegen. Soweit nachfolgend der Begriff "Flüssiggas" verwendet wird, schließt dies daher den Fall ein, dass das Flüssiggas in dem gasförmigen Zustand vorliegt und/oder in diesen übergegangen ist (z. B. indem es ausgehend von einer Flüssiggas-Gasflasche durch einen Druckminderer geleitet wurde). Der Betriff "Flüssiggas" erfordert nicht, dass das Flüssiggas bei Standardbedingungen (20° C Raumtemperatur und Druck von 1 bar) flüssig ist. Flüssiggas kann bei diesen Standardbedingungen auch gasförmig sein, was insbesondere bei Propan und Butan der Fall ist.

Ebenso bezeichnet der Begriff "Druck" im Rahmen dieser Offenbarung, sofern nicht explizit anders angegeben, den Gasdruck des Flüssiggases.

Eine Ausführungsform der Erfindung betrifft eine Vorrichtung zur Verhinderung einer Rückverflüssigung eines Flüssiggases in einem Flüssiggasleitungssystem, aufweisend einen Körper mit einem Einlass, einem Auslass und einem Körperinnenraum und einen im Körperinnenraum angeordneten doppelseitig wirkenden Kolben. Der Kolben ist dabei im Körperinnenraum zwischen einer ersten Stellung und einer zweiten Stellung verschiebbar, wobei der Kolben in seiner ersten Stellung einen Durchfluss des Flüssiggases vom Einlass zum Auslass verhindert. In einer dritten Stellung des Kolbens zwischen der ersten Stellung und der zweiten Stellung lässt die Vorrichtung einen Durchfluss des Flüssiggases vom Einlass zum Auslass zu. Der Kolben weist eine dem Einlass zugewandte erste Kolbenseite mit einer ersten wirksamen Kolbenfläche F1 und eine dem Auslass zugewandte zweite Kolbenseite mit einer zweiten wirksamen Kolbenfläche F2 auf, wobei die zweite wirksame Kolbenfläche F2 größer ist als die erste wirksame Kolbenfläche F1.

Aufgrund des Verhältnisses der ersten wirksamen Kolbenfläche F1 und der zweiten wirksamen Kolbenfläche F2 bewegt sich der Kolben in die erste Stellung, in der die Vorrichtung geschlossen ist, wenn der Druck des Flüssiggases $p1$ am Einlass, der Druck des Flüssiggases am Auslass $p2$, die erste wirksame Kolbenfläche F1 und die zweite wirksame Kolbenfläche F2 folgende Ungleichung erfüllen: $p2 > p1 \cdot F1/F2$. Mit anderen Worten, wenn der Druck $p2$ auf der Auslassseite den Grenzwert $p1 \cdot F1/F2$ überschreitet, bewegt sich der Kolben in die erste Stellung, d.h. in die Schließstellung, und die Vorrichtung verhindert, dass Flüssiggas vom Einlass zum Auslass der Vorrichtung strömt. Da die zweite wirksame Kolbenfläche F2 größer als die erste wirksame Kolbenfläche F1 ist, ist der Grenzwert $p1 \cdot F1/F2$ kleiner als $p1$. Das bedeutet, dass die Vorrichtung einen Durchfluss des Flüssiggases vom Einlass zum Auslass verhindert, wenn der Druck am Auslass einen Grenzwert überschreitet, der niedriger ist als der Druck am Einlass. Auf diese Weise kann verhindert werden, dass der Druck des Flüssiggases am Auslass den Druck des Flüssiggases erreicht, der am Einlass, d.h. vorzugsweise auch in der Flüssiggasquelle, vorherrscht. Somit verhindert die Vorrichtung eine Rückverflüssigung des Flüssiggases am Auslass und somit im am Auslass angeschlossenen Teil des Flüssiggasleitungssystems. Hierbei ist zu beachten, dass es sich um eine idealisierte Betrachtung handelt. In Realität können Abweichungen zu dem oben genannten Grenzwert z.B. aufgrund der hierin offenbarten Krafteinrichtung und/oder von inneren Reibungsverlusten auftreten, die unter anderem von einer Dichtung zwischen dem Kolben und dem Körper herrühren können. Die grundsätzliche Wirkungsweise und Aussage bleiben hiervon jedoch unberührt.

Wenn der Druck des Flüssiggases am Auslass wieder unter diesen Druckgrenzwert fällt, bewegt sich der Kolben wieder von der ersten Stellung weg. Dieser Vorgang kann dynamisch sein, so dass, sobald der Druck am Auslass abgesunken ist, wieder eine kleine Flüssiggasmenge eingelassen wird bis der Druckgrenzwert des Flüssiggases am Auslass erreicht ist.

Unter einem doppelseitig wirkenden Kolben ist ein Kolben zu verstehen, der zwei gegenüberliegenden Kolbenflächen aufweist, die jeweils mit dem Druck des Flüssiggases beaufschlag werden können, so dass der Kolben axial in beide Richtungen aktiv durch den Druck des Flüssiggases bewegt wird.

Unter der ersten Kolbenseite ist dabei die Seite des Kolbens zu verstehen, die dem Druck des Flüssiggases am Einlass ausgesetzt ist. Entsprechend ist unter der zweiten Kolbenseite die Seite des Kolbens zu verstehen, die dem Druck des Flüssiggases am Auslass ausgesetzt ist. Unter einer wirksamen Kolbenfläche ist eine Projektion der jeweiligen Kolbenseite in Axialrichtung des Kolbens, d.h. entlang der Längsachse des Kolbens, auf eine gedachte, senkrecht zur Axialrichtung ausgerichtete Projektionsebene zu verstehen. Das heißt, die erste wirksame Kolbenfläche bezeichnet eine Projektion der ersten Kolbenseite in Axialrichtung des Kolbens auf eine gedachte, senkrecht zur Axialrichtung ausgerichtete Projektionsebene, also diejenige Fläche der ersten Kolbenseite, die aufgrund des am Einlass wirkenden Drucks des Flüssiggases auf die erste Kolbenseite auf den Kolben eine in Axialrichtung zum Auslass gerichtete Kraft bewirkt. Ebenso bezeichnet die zweite wirksame Kolbenfläche eine Projektion der zweiten Kolbenseite in Axialrichtung des Kolbens auf eine gedachte, senkrecht zur Axialrichtung ausgerichtete Projektionsebene, also diejenige Fläche der zweiten Kolbenseite, die aufgrund des am Auslass wirkenden Drucks des Flüssiggases auf die zweite Kolbenseite auf den Kolben eine in Axialrichtung zum Einlass gerichtete Kraft bewirkt.

Der Kolben kann dabei derart im Körperinnenraum gelagert sein, dass er nur entlang seiner Axialrichtung bewegbar ist. Die erste und die zweite Stellung des Kolbens bezeichnen die Endpositionen des Kolbens zwischen denen der Kolben bewegbar ist. Die dritte Stellung bezeichnet eine Stellung des Kolbens zwischen diesen beiden Endpositionen. Vorzugsweise kann der Kolben jedwede Position zwischen der ersten Stellung und der zweiten Stellung einnehmen. Bei der dritten Stellung muss es sich daher nicht um eine feste Position des Kolbens handeln. Das heißt, im Betrieb kann die Position des Kolbens zwischen der ersten Stellung und der zweiten Stellung je nach Druck am Einlass und Auslass und abhängig von der Temperatur variieren. Unter der dritten Stellung können daher alle möglichen Betriebspositionen des Kolbens zwischen der ersten Stellung und der zweiten Stellung (d.h. ausgenommen von der ersten Stellung und der zweiten Stellung) verstanden werden.

Vorzugsweise ist die Vorrichtung geeignet und/oder ausgebildet, um mit Flüssiggas zu operieren, das am Einlass mit einem Druck im Bereich zwischen 1 bar und 16 bar, vorzugsweise zwischen 3 bar und 6 bar, bereitgestellt wird. Mit anderen Worten kann die Vorrichtung dazu geeignet und/oder eingerichtet sein, um mit einem Flüssiggas wie Propan, und Butan, Propen, Buten, Isobutan und/oder Isobuten sowie deren Gemische zu operieren.

Vorzugsweise unterscheidet sich die Größe der ersten wirksamen Kolbenfläche F1 in der ersten Stellung des Kolbens um 20% oder weniger, vorzugsweise 10% oder weniger, von der Größe der ersten wirksamen Kolbenfläche F1 in der zweiten und/oder dritten Stellung des Kolbens; wobei die Größe der ersten wirksamen Kolbenfläche F1 in der ersten Stellung des Kolbens und der dritten Stellung des Kolbens weiter bevorzugt gleich ist.

Wenn die erste wirksame Kolbenfläche in der ersten Stellung des Kolbens mit $F1_1$, in der zweiten Stellung des Kolbens mit $F1_2$, und in der dritten Stellung des Kolbens mit $F1_3$ bezeichnet wird, kann dies wie folgt ausgedrückt werden:

$|F1_1 - F1_2| \leq K\,F1_2$ und/oder $|F1_1 - F1_3| \leq K\,F1_3$, wobei K= 0,2; 0,1; 0.

Auf diese Weise kann sichergestellt werden, dass sich die durch den auf die erste wirksame Kolbenfläche ausgeübten Gasdruck bewirkte Kraft auf den Kolben in der ersten Stellung des Kolbens um 20% oder weniger, vorzugsweise 10% oder weniger, von der durch den auf die erste wirksame Kolbenfläche ausgeübten Gasdruck bewirkte Kraft auf den Kolben in der zweiten und/oder dritten Stellung des Kolbens unterscheidet. Weiter bevorzugt unterscheidet sich diese Kraft in der ersten Stellung des Kolbens und der zweiten und/oder dritten Stellung des Kolbens nicht. Dadurch ist Vorrichtung auch dann funktionsfähig, wenn sich der Kolben in der ersten Stellung befindet.

Vorzugsweise unterscheidet sich die Größe der zweiten wirksamen Kolbenfläche F2 in der zweiten Stellung des Kolbens um 20% oder weniger, vorzugsweise 10% oder weniger, von der Größe der zweiten wirksamen Kolbenfläche F2 in der ersten und/oder dritten Stellung des Kolbens unterscheidet; wobei die Größe der zweiten wirksamen Kolbenfläche F2 in der zweiten Stellung des Kolbens und der dritten Stellung des Kolbens weiter bevorzugt gleich ist.

Wenn die zweite wirksame Kolbenfläche in der ersten Stellung des Kolbens mit $F2_1$, in der zweiten Stellung des Kolbens mit $F2_2$, und in der dritten Stellung des Kolbens mit $F2_3$ bezeichnet wird, kann dies wie folgt ausgedrückt werden:

$|F2_2 - F2_1| \leq K\,F2_1$ und/oder $|F2_2 - F2_3| \leq K\,F2_3$, wobei K= 0,2; 0,1; 0.

Auf diese Weise kann sichergestellt werden, dass sich die durch den auf die zweite wirksame Kolbenfläche ausgeübten Gasdruck bewirkte Kraft auf den Kolben in der zweiten Stellung des Kolbens um 20% oder weniger, vorzugsweise 10% oder weniger, von der durch den auf die zweite wirksame Kolbenfläche ausgeübten Gasdruck bewirkte Kraft auf den Kolben in der ersten und/oder dritten Stellung des Kolbens unterscheidet. Weiter bevorzugt unterscheidet sich diese Kraft in der zweiten Stellung des Kolbens und der ersten und/oder dritten Stellung des Kolbens nicht. Dadurch ist Vorrichtung auch dann funktionsfähig, wenn sich der Kolben in der zweiten Stellung befindet.

Unter der Größe der ersten bzw. zweiten wirksamen Kolbenfläche F1 bzw. F2 ist der Flächeninhalt der ersten bzw. zweiten wirksamen Kolbenfläche F1 bzw. F2 zu verstehen.

Vorzugsweise ist die Vorrichtung derart konfiguriert, besonders bevorzugt sind die erste wirksame Kolbenfläche und die zweite wirksame Kolbenfläche derart aufeinander abgestimmt, dass der Kolben die erste Stellung einnimmt, wenn der Druck des Flüssiggases am Auslass größer ist als der fünfte Teil, bevorzugt der achte Teil, besonders bevorzugt der zehnte Teil des Drucks des Flüssiggases am Einlass.

Mit anderen Worten soll der Kolben die erste Stellung einnehmen, wenn der Druck p1 des Flüssiggases am Einlass und der Druck des Flüssiggases p2 am Auslass folgende Ungleichung erfüllen: $p2/p1 > 1/5$, bevorzugt $p2/pl > 1/8$, besonders bevorzugt $p2/pl > 1/10$.

Aufgrund der Tatsache, dass sich der Kolben bei den genannten Druckverhältnissen in die erste Stellung, d.h. in die Schließstellung, bewegt, wird verhindert, dass der Druck des Flüssiggases am Auslass einen Wert einnimmt, bei dem das Flüssiggas den flüssigen Aggregatszustand einnimmt.

In einer Gasflasche kann in der Praxis ein Druck von bis zu 16 bar herrschen, üblicherweise jedoch zwischen 3 bar und 6 bar. Angenommen das Flüssiggas weist am Einlass einen Druck p1 von maximal 16 bar auf, nimmt der Kolben die erste Stellung ein, wenn der Druck p2 des Flüssiggases am Auslass 3,2 bar, bevorzugt 2 bar und besonders bevorzugt 1,6 bar beträgt. Hierbei handelt es sich jedoch lediglich um eine idealisierte Betrachtung. Abweichungen können beispielsweise aufgrund der hierin offenbarten Krafteinrichtung und/oder internen Reibungsverluste auftreten, die unter anderem von der Dichtung zwischen dem Kolben und dem Körper bewirkt werden. Die grundsätzliche Wirkungsweise und Aussagen bleiben hiervon jedoch unberührt.

Vorzugsweise gilt $F2 \geq 5 * F1$, bevorzugt $F2 \geq 8 * F1$ besonders bevorzugt $F2 \geq 10 * F1$. Auf diese Weise kann erreicht werden, dass der Kolben die erste Position einnimmt, wenn ungefähr $p2/p1 > 1/5$, bevorzugt $p2/p1 > 1/8$, besonders bevorzugt $p2/p1 > 1/10$. Aufgrund z.B. der hierin offenbarten Krafteinrichtung und/oder internen Reibungsverluste, die unter anderem von der Dichtung zwischen dem Kolben und dem Körper bewirkt werden, können Abweichungen zu diesen Ungleichungen auftreten. Die grundsätzliche Gesetzmäßigkeit bleibt hiervon jedoch unberührt.

Vorzugsweise gilt $F2 \geq 5 * F1$, bevorzugt $F2 \geq 8 * F1$ besonders bevorzugt $F2 \geq 10 * F1$, wenn der Kolben in der ersten und/oder zweiten und/oder dritten Stellung ist. Stärker bevorzugt gilt dies unabhängig von der Stellung des Kolbens.

Vorzugsweise gilt $F2 \leq 50 * F1$, besonders bevorzugt $F2 \leq 20 * F1$. Auf diese Weise wird sichergestellt, dass am Auslass ein ausreichender Druck des Flüssiggases vorherrscht.

F1 beträgt beispielsweise zwischen 50 mm$^2$ und 80 mm$^2$, vorzugsweise zwischen 60 mm$^2$ und 70 mm$^2$, besonders bevorzugt ca. 66 mm$^2$. Beispielsweise kann die erste Kolbenfläche kreisförmig sein und einen Durchmesser von 10 mm sowie eine Durchgangsbohrung mit einem Durchmesser von 4 mm aufweisen. F2 beträgt beispielsweise zwischen 600 mm$^2$ und 800 mm$^2$, vorzugsweise zwischen 650 mm$^2$ und 750 mm$^2$, besonders bevorzugt ca. 690 mm$^2$. Beispielsweise kann die zweite Kolbenfläche kreisförmig sein und einen Durchmesser von 30 mm sowie eine Durchgangsbohrung mit einem Durchmesser von 4 mm aufweisen.

Vorzugsweise gilt $F2 \leq 50 * F1$, besonders bevorzugt $F2 \leq 20 * F1$, wenn der Kolben in der ersten und/oder zweiten und/oder dritten Stellung ist. Stärker bevorzugt gilt dies unabhängig von der Stellung des Kolbens.

Vorzugsweise verhindert die Vorrichtung in der zweiten Stellung des Kolbens einen wesentlichen Durchfluss des Flüssiggases vom Einlass zum Auslass.

Unter der Angabe, dass ein wesentlicher Durchfluss verhindert wird, ist zu verstehen, dass in der zweiten Stellung des Kolbens ein geringfügiger Durchfluss von Flüssiggas vom Einlass zum Auslass der Vorrichtung möglich sein kann. Unter einem geringfügigen Durchfluss kann ein Durchfluss mit einer Strömungsrate < 40 l/h, bevorzugt < 30 l/h, besonders bevorzugt < 20 l/h verstanden werden. Dieser geringfügige Durchfluss kann beispielsweise durch die unten genannte Umgehung gewährleistet werden.

Wie nachfolgend erläutert, kann die Vorrichtung derart eingerichtet sein, dass der Kolben bei einem plötzlichen Druckabfall, z.B. durch einen Schlauchabriss, am Auslass der Vorrichtung, sich in die zweite Stellung bewegt und die Vorrichtung bis auf den geringfügigen Durchfluss verschließt. Durch das Vorsehen des geringfügigen Durchflusses kann der Druck am Auslass der Vorrichtung nach einem solchen Druckabfall wieder kontinuierlich aufgebaut werden, falls die Störung, z.B. der Schlauchabriss, behoben wurde oder der Kolben sich lediglich fehlerhaft oder aufgrund einer Fehlbedienung in die zweite Stellung bewegt hat. Wenn der Druck auf der Auslassseite der Vorrichtung wieder aufgebaut worden ist, bewegt sich der Kolben von der zweiten Stellung wieder in die dritte Stellung zwischen der ersten Stellung und der zweiten Stellung, so dass die Vorrichtung wieder geöffnet wird.

Der geringfügige Durchfluss stellt jedoch bei einem tatsächlichen Schlauchabriss keine Gefahr dar.

Alternativ kann die Vorrichtung konfiguriert sein, dass sie den Durchfluss von Flüssiggas vom Einlass zum Auslass in der zweiten Stellung des Kolbens vollständig verhindert, d.h. ohne einen geringfügigen Durchfluss vom Einlass zum Auslass zu ermöglichen.

In diesem Fall kann beispielsweise eine hierin offenbarte Betätigungsvorrichtung vorgesehen sein, um den Kolben manuell von der zweiten Stellung in die erste oder dritte Stellung zu bewegen.

Vorzugsweise nimmt der Kolben die zweite Stellung ein, wenn beim Auslass der Vorrichtung ein Druckabfall des Flüssiggases, vorzugsweise ein plötzlicher Druckabfall durch einen Schlauchabriss, auftritt.

Mit anderen Worten kann die Vorrichtung auch eine Schlauchabrisssicherung und/oder eine Schlauchbruchsicherung bereitstellen.

Vorzugsweise weist die Vorrichtung eine Längsachse auf. Der Innenraum des Körpers ist bezüglich der Längsachse im Wesentlichen rotationssymmetrisch und der Kolben ist bezüglich der Längsachse im Wesentlichen rotationssymmetrisch.

Im Rahmen der Offenbarung bezeichnet der Begriff "Axialrichtung" oder "axial" eine Richtung entlang der Längsachse.

Unter der Angabe im Wesentlichen ist zu verstehen, dass die allgemeine Form des Innenraums und/oder Kolbens rotationssymmetrisch um die Längsachse ist. Der Innenraum und/oder der Kolben können z.B. Führungsrillen, Bohrungen oder dergleichen aufweisen, die die Rotationssymmetrie brechen. Dennoch gilt der Innenraum und/oder der Kolben als rotationssymmetrisch um die Längsachse.

Vorzugsweise liegen der Einlass und der Auslass auf der Längsachse der Vorrichtung.

Auf diese Weise eignet sich die Vorrichtung für eine Montage in Längsrichtung der Gasleitung. Somit wird eine platzsparende Montage der Vorrichtung ermöglicht.

Vorzugsweise weist der Körperinnenraum einen ersten Innenraumabschnitt mit einem ersten Durchmesser und einen zweiten Innenraumabschnitt mit einem zweiten Durchmesser auf. Der erste Innenraumabschnitt ist näher beim Einlass als der zweite Innenraumabschnitt. Der zweite Durchmesser ist größer als der erste Durchmesser. Der Kolben weist einen ersten Kolbenabschnitt mit der ersten wirksamen Kolbenfläche und einen zweiten Kolbenabschnitt mit der zweiten wirksamen Kolbenfläche auf, wobei der erste Kolbenabschnitt zumindest teilweise im ersten Innenraumabschnitt angeordnet ist und wobei der zweite Kolbenabschnitt zumindest teilweise im zweiten Innenraumabschnitt angeordnet ist.

Unter dem ersten bzw. zweiten Innenraumabschnitt kann sowohl das Volumen des entsprechenden Abschnitts verstanden werden als auch die Wandung des Körpers, der dieses Volumen umgrenzt.

Vorzugsweise weist die Vorrichtung eine erste Dichtung zwischen dem ersten Kolbenabschnitt und dem ersten Innenraumabschnitt und/oder eine zweite Dichtung zwischen dem zweiten Kolbenabschnitt und dem zweiten Innenraumabschnitt auf.

Die erste Dichtung kann vorzugsweise am ersten Kolbenabschnitt vorgesehen sein und/oder die zweite Dichtung kann vorzugsweise am zweiten Kolbenabschnitt vorgesehen sein. Die erste Dichtung kann durch einen oder mehrere Dichtungsringe bereitgestellt sein und/oder die zweite Dichtung kann durch einen oder mehrere Dichtungsringe bereitgestellt sein.

Auf diese Weise kann sichergestellt werden, dass auf die erste Kolbenseite nur der Druck des Flüssiggases am Einlass der Vorrichtung und auf die zweiten Kolbenseite nur der Druck des Flüssiggases am Auslass der Vorrichtung wirken, insbesondere wenn eine erste Dichtung am ersten Kolbenabschnitt und eine zweite Dichtung am zweiten Kolbenabschnitt vorgesehen sind.

Vorzugsweise ist die erste Dichtung eine Lippendichtung. Vorzugsweise ist die zweite Dichtung eine Lippendichtung. Auf diese Weise kann die Reibung zwischen dem Kolben und dem Innenraum minimiert werden.

Vorzugsweise weist der Körperinnenraum eine zwischen dem ersten Innenraumabschnitt und dem zweiten Innenraumabschnitt angeordnete Innenraumschulterfläche auf. Vorzugsweise weist der Kolben zwischen dem ersten Kolbenabschnitt und dem zweiten Kolbenabschnitt eine Kolbenschulterfläche auf.

Vorzugsweise ist ein Volumen zwischen der Innenraumschulterfläche und der Kolbenschulterfläche eingeschlossen ist, dessen Größe von der Stellung des Kolbens abhängt.

Vorzugsweise ist die Vorrichtung derart eingerichtet, dass das zwischen der Innenraumschulterfläche und der Kolbenschulterfläche eingeschlossene Volumen mit Umgebungsdruck beaufschlagt ist; und/oder der Körper weist vorzugsweise eine Öffnung auf, welche das zwischen der Innenraumschulterfläche und der Kolbenschulterfläche eingeschlossene Volumen mit der Umgebung verbindet.

Auf diese Weise wird die Funktion des Kolbens sichergestellt. Beispielsweise wird verhindert, dass sich bei der Bewegung des Kolbens in Richtung der zweiten Stellung im eingeschlossenen Volumen ein Unterdruck aufbauen kann, der den Kolben in Richtung der ersten Stellung zieht.

Die Vorrichtung kann eine Krafteinrichtung, bevorzugt eine Federeinrichtung, aufweisen, die zum Anwenden einer Kraft in Richtung der zweiten Stellung auf den Kolben eingerichtet ist, wenn sich der Kolben in der ersten Stellung oder nahe der ersten Stellung befindet. Vorzugsweise beträgt die Kraft weniger als 6 N, stärker bevorzugt weniger als 5 N. Vorzugsweise weist die Krafteinrichtung eine Federkonstante von weniger als 3 N/mm, stärker bevorzugt weniger als 2 N/mm auf.

Vorzugsweise ist die Federeinrichtung eine Schraubenfeder oder Spiralfeder, insbesondere eine auf Druck belastete Schraubenfeder oder Spiralfeder. Besonders bevorzugt ist die Schrauben- oder Spiralfeder um den ersten Kolbenabschnitt herum angeordnet.

Die Krafteinrichtung kann alternativ beispielsweise auch in Form eines Magnets bereitgestellt werden, der den Kolben abstößt, wenn sich dieser in der ersten Stellung oder nahe der ersten Stellung befindet.

Vorzugsweise ist die Kraft der Krafteinrichtung derart konfiguriert, dass die Krafteinrichtung den Kolben in Richtung der zweiten Stellung bewegt, wenn der Druck des Flüssiggases am Einlass und am Auslass so gering ist, dass der Druck des Flüssiggases am Auslass einen Schwellwert unterschreitet, wobei der Schwellwert bevorzugt kleiner oder gleich ist als 0,1 bar, besonders bevorzugt 0,03 bar.

Vorzugsweise weist der Körperinnenraum eine zwischen dem ersten Innenraumabschnitt und dem zweiten Innenraumabschnitt angeordnete Innenraumschulterfläche auf. Weiterhin weist der Kolben zwischen dem ersten Kolbenabschnitt und den zweiten Kolbenabschnitt vorzugsweise eine Kolbenschulterfläche auf. Die Krafteinrichtung übt eine Druckkraft auf die Innenraumschulterfläche und die Kolbenschulterfläche aus, wenn sich der Kolben in der ersten Stellung befindet.

Vorzugsweise ist die Krafteinrichtung eine Druckfeder, die zumindest in der ersten Stellung des Kolbens an der Innenraumschulterfläche und der Kolbenschulterfläche anliegt. Weiter bevorzugt wird die Druckfeder in der ersten Stellung des Kolbens komprimiert, so dass sie in der ersten Stellung des Kolbens eine Druckkraft auf die Innenraumschulterfläche und die Kolbenschulterfläche ausübt. Die Druckfeder kann auch über die erste Stellung des Kolbens hinaus an der Kolbenschulterfläche anliegen, muss jedoch nicht in jeder Stellung des Kolbens an der Kolbenschulterfläche anliegen. Die Druckfeder kann als Schrauben- oder Spiralfeder ausgebildet sein.

Unter der Innenraumschulterfläche und/oder der Kolbenschulterfläche können/kann auch eine Innenraumanlagefläche und/oder eine Kolbenanlagefläche verstanden werden. Vorzugsweise sind/ist die Innenraumschulterfläche und/oder die Kolbenschulterfläche senkrecht zur Axialrichtung des Kolbens ausgerichtet.

Mit anderen Worten stößt die Krafteinrichtung die Kolbenschulterfläche von der Innenraumschulterfläche in Richtung der zweiten Stellung weg.

Mittels dieser Krafteinrichtung kann sichergestellt werden, dass die Vorrichtung nicht verschließt, wenn der Druck am Einlass unter den Schwellwert, bevorzugt 0,1 bar, besonders bevorzugt 0,03 bar, fällt. Auf diese Weise kann einerseits eine komplette Entleerung der Gasflasche gewährleistet werden. Andererseits können die resultierenden Kräfte auf den Kolben, wenn sich der Kolben in der ersten Stellung oder nahe der ersten Stellung befindet, kleiner als die Reibungskräfte sein, die durch die eine oder die mehreren Dichtungen bewirkt werden, die zwischen Kolben und Kolbeninnenraum vorgesehen ist/sind. Das heißt, dass die Krafteinrichtung eine sichere Funktion der Vorrichtung auch dann sicherstellen kann, wenn sich der Kolben in der ersten Stellung und/oder nahe der ersten Stellung befindet.

Bei geringer Reibung, z.B. bei Verwendung einer Lippendichtung für die erste und/oder zweite Dichtung, kann auf die Krafteinrichtung verzichtet oder eine Krafteinrichtung geringer Stärke verwendet werden. Eine solche Krafteinrichtung ist in diesem Fall vorzugsweise nicht erforderlich, um die Funktion der Vorrichtung zu gewährleisten. Hierdurch wird die Vorrichtung in ihrer Konstruktion vereinfacht.

Vorzugsweise weist die Vorrichtung daher keine Krafteinrichtung auf, die eingerichtet ist, um eine Kraft auf den Kolben in Richtung der ersten und/oder zweiten Stellung auszuüben.

Vorzugsweise ist im zwischen der Innenraumschulterfläche und der Kolbenschulterfläche eingeschlossenen Volumen keine Krafteinrichtung aufweist, die eingerichtet ist, um eine Kraft auf den Kolben in Richtung der ersten und/oder zweiten Stellung auszuüben.

Auf diese Weise wird der Druck p2 des Flüssiggases am Auslass im Wesentlichen nur durch den Druck p1 des Flüssiggases am Einlass, die erste wirksame Kolbenfläche F1 und die zweite Wirksame Kolbenfläche F2

$$p2 = p1\,\frac{F2}{F1}$$

bestimmt:

Alternativ kann eine Krafteinrichtung mit geringer Stärke verwendet werden. Unter einer solchen Krafteinrichtung mit geringer Stärke wird z.B. eine Kraftrichtung verstanden, die in der ersten Stellung eine Kraft von weniger als 6 N, vorzugsweise weniger als 5 N, ausübt und/oder eine Federkonstante von weniger als 3 N/mm, vorzugsweise weniger als 2 N/mm hat.

Vorzugsweise weist der Körperinnenraum einen ersten Anschlag auf. In der ersten Stellung des Kolbens liegt die erste Kolbenseite abdichtend am ersten Anschlag, so dass der Durchfluss des Flüssiggases vom Einlass zum Auslass verhindert wird.

Vorzugsweise liegt der erste Anschlag derart an der ersten Kolbenseite auf, dass sich die Größe der ersten wirksame Kolbenfläche F1 um 20% oder weniger, vorzugsweise um 10% oder weniger, weiter bevorzugt nicht, ändert. Gleichzeitig kann der erste Anschlag eingerichtet sein, dass das Flüssiggas um ihn herum und/oder durch ihn hindurchfließen kann. Vorzugsweise kann der erste Anschlag derart eingerichtet sein, dass das Flüssiggas auch dann um den ersten Anschlag herum und/oder durch den ersten Anschlag hindurchfließen kann, wenn sich der Kolben in der ersten Stellung befindet. Auf diese Weise kann erreicht werden, dass sich die Größe der ersten wirksamen Fläche F1 in der ersten Stellung des Kolbens nicht wesentlich von der Größe der ersten wirksamen Fläche F1 des Kolbens in der dritten und/oder zweiten Stellung des Kolbens unterscheidet.

Beim ersten Anschlag kann es sich um einen Einsatz handeln, der in den Körperinnenraum eingepasst (z.B. eingepresst oder eingeschraubt) ist. Der erste Anschlag kann jedoch auch integral und/oder einstückig mit dem Körper der Vorrichtung ausgebildet sein.

Vorzugsweise weist der Körperinnenraum einen zweiten Anschlag auf. In der zweiten Stellung liegt die zweite Kolbenseite des Kolbens vorzugsweise abdichtend am zweiten Anschlag an, so dass der wesentliche Durchfluss des Flüssiggases vom Einlass zum Auslass verhindert wird.

Vorzugsweise liegt der zweite Anschlag derart an der zweiten Kolbenseite auf, dass sich die Größe der zweiten wirksame Kolbenfläche F2 um 20% oder weniger, vorzugsweise um 10% oder weniger, weiter bevorzugt nicht, ändert. Gleichzeitig kann der zweite Anschlag eingerichtet sein, dass das Flüssiggas um ihn herum und/oder durch ihn hindurchfließen kann. Vorzugsweise kann der zweite Anschlag derart eingerichtet sein, dass das Flüssiggas auch dann um den zweiten Anschlag herum und/oder durch den weiten Anschlag hindurchfließen kann, wenn sich der Kolben in der zweiten Stellung befindet. Auf diese Weise kann erreicht werden, dass sich die Größe der zweiten wirksamen Fläche F2 in der zweiten Stellung des Kolbens nicht wesentlich von der Größe der zweiten wirksamen Fläche F2 des Kolbens in der dritten und/oder ersten Stellung des Kolbens unterscheidet.

Beim zweiten Anschlag kann es sich um einen Einsatz handeln, der in den Körperinnenraum eingepasst (z.B. eingepresst oder eingeschraubt) ist. Der zweite Anschlag kann jedoch auch integral und/oder einstückig mit dem Körper der Vorrichtung ausgebildet sein.

Der erste Anschlag ist vorzugsweise näher beim Einlass angeordnet als der zweite Anschlag.

Vorzugsweise weist der Kolben eine von der ersten Kolbenseite zur zweiten Kolbenseite durchgehende Bohrung auf, wobei die Vorrichtung in der dritten Stellung des Kolbens einen Durchfluss des Flüssiggases vom Einlass durch die Bohrung des Kolbens zum Auslass zulässt.

Unter der Bohrung kann jedweder Durchlass des Kolbens verstanden werden, der einen Durchfluss des Flüssiggases vorzugsweise größer als 900 l/h von der ersten Kolbenseite zur zweiten Kolbenseite ermöglicht. Vorzugsweise handelt es sich bei der Bohrung um eine koaxial zur Axialrichtung des Kolbens angeordnete Bohrung.

Vorzugsweise hat der Durchlass senkrecht zur Axialrichtung einen lichten Querschnitt, der größer ist als 9 mm$^2$, besonders bevorzugt größer als 13 mm$^2$.

Vorzugsweise dichtet der erste Anschlag in der ersten Stellung des Kolbens die Bohrung ab, insbesondere indem der erste Anschlag am Kolben auf der ersten Kolbenseite im Bereich der Bohrung dichtend anliegt.

Vorzugsweise liegt der erste Anschlag in der ersten Stellung des Kolbens an einer Kante der Bohrung des Kolbens auf der ersten Kolbenseite an. Besonders bevorzugt ist an der auf der ersten Kolbenseite angeordneten Kante der Bohrung des Kolbens eine ringförmige Dichtung angeordnet, mit der der Anschlag dichtet (z. B. in die der Anschlag eingreift), wenn sich der Kolben in der ersten Stellung befindet.

Vorzugsweise liegt ein überwiegender Teil der ersten wirksamen Kolbenfläche in der ersten Stellung nicht am ersten Anschlag an, vorzugsweise mindestens 60%, mindestens 80% oder mindestens 90% der ersten wirksamen Kolbenfläche.

Vorzugsweise dichtet der zweite Anschlag in der zweiten Stellung des Kolbens die Bohrung ab, insbesondere indem der zweite Anschlag am Kolben auf der zweiten Kolbenseite im Bereich der Bohrung dichtend anliegt.

Vorzugsweise liegt der zweite Anschlag in der zweiten Stellung des Kolbens an einer Kante der Bohrung des Kolbens auf der zweiten Kolbenseite an. Besonders bevorzugt ist an der auf der zweiten Kolbenseite angeordneten Kante der Bohrung des Kolbens eine ringförmige Dichtung angeordnet, mit der der Anschlag dichtet (z. B. in die der Anschlag eingreift), wenn sich der Kolben in der zweiten Stellung befindet.

Vorzugsweise liegt ein überwiegender Teil der zweiten wirksamen Kolbenfläche in der zweiten Stellung nicht am zweiten Anschlag an, vorzugsweise mindestens 60%, mindestens 80% oder mindestens 90% der zweiten wirksamen Kolbenfläche.

Auf diese Weise kann ein effektives Verschließen der Bohrung des Kolbens sichergestellt werden. Gleichzeitig kann sich der Kolben aufgrund der kleinen Kontaktfläche mit dem ersten und/oder zweiten Anschlag auch leicht vom ersten und/oder zweiten Anschlag lösen.

Vorzugsweise stellt die Vorrichtung eine Umgehung für den zweiten Anschlag bereit, um in der zweiten Stellung des Kolbens einen geringfügigen Durchfluss des Flüssiggases vom Einlass zum Auslass zuzulassen.

Mit anderen Worten ist unter der Umgehung ein Umgehungsströmungspad zu verstehen, entlang dessen in der zweiten Stellung des Kolbens der geringfügige Durchfluss des Flüssiggases vom Einlass zum Auslass ermöglicht wird. Der Querschnitt der Umgehung kann dabei derart konfiguriert sein, dass lediglich ein geringfügiger Durchfluss des Flüssiggases vom Einlass zum Auslass zugelassen wird.

Vorzugsweise weist die Umgehung senkrecht zur Flussrichtung des Gases einen lichten Querschnitt von weniger als 0,7 mm$^2$ oder bevorzugt von weniger als 0,2 mm² auf.

Auf diese Weise kann sichergestellt werden, dass lediglich ein geringfügiger Durchfluss des Flüssiggases ermöglicht wird.

Vorzugsweise weist die Umgehung einen Umgehungskanal im Körper und/oder im Kolben und/oder im zweiten Anschlag und/oder in einer Dichtung auf, die am zweiten Anschlag anliegt.

Vorzugsweise ist der Umgehungskanal durch eine Bohrung im zweiten Anschlag bereitgestellt.

Vorzugsweise weist die Vorrichtung eine Betätigungseinrichtung auf, um den Kolben manuell aus der zweiten Stellung heraus zu bewegen.

Mit anderen Worten kann der Kolben manuell aus der zweiten Stellung in die dritte Stellung und/oder in Richtung der ersten Stellung bewegt werden.

Eine weitere Ausführungsform der Erfindung betrifft ein Flüssiggasleitungssystem aufweisend eine Flüssiggasquelle, vorzugsweise eine Flüssiggasflasche, und eine Vorrichtung wie hierin offenbart, wobei die Vorrichtung bevorzugt unmittelbar am Auslass der Flüssiggasquelle angeschlossen ist.

Vorzugsweise ist die Vorrichtung ohne Zwischenschaltung eines Schlauches, eines Druckreglers (oder Druckminderers) und/oder einer Schlauchbruchsicherung an der Flüssiggasquelle angeschlossen.

Auf diese Weise kann sichergestellt werden, dass zwischen der Flüssiggasquelle und der Vorrichtung keine Komponente angeordnet ist, die durch eine mögliche Rückverflüssigung des Flüssiggases beeinträchtigt oder beschädigt werden kann.

Vorzugsweise ist die Vorrichtung so ausgelegt, dass in der dritten Stellung des Kolbens der Druck vom Einlass zum Auslass um weniger als 1/6, vorzugsweise um weniger als 1/8 oder weniger als 1/10 abfällt. In diesem Fall wird der Druck stromabwärts der Vorrichtung vorzugsweise durch einen Druckregler geregelt.

Eine weitere Ausführungsform der Erfindung betrifft ein Fahrzeug, vorzugsweise ein Caravan, ein Reisemobil oder ein Boot, aufweisend eine Vorrichtung wie hierin offenbart oder ein Leitungssystem wie hierin offenbart.

Eine weitere Ausführungsform der Erfindung betrifft die Verwendung einer Vorrichtung zur Verhinderung einer Rückverflüssigung eines Flüssiggases in einem Flüssiggasleitungssystem, vorzugsweise mit den hierin offenbarten Merkmalen, in einem Leitungssystem, vorzugsweise mit den hierin offenbarten Merkmalen, oder einem Fahrzeug, vorzugsweise mit den hierin offenbarten Merkmalen.

Die Erfindung und/oder bevorzugte Ausführungsformen der Erfindung werden auch in den folgenden Aspekten beschrieben und offenbart.

1. Vorrichtung zur Verhinderung einer Rückverflüssigung eines Flüssiggases in einem Flüssiggasleitungssystem, aufweisend:

einen Körper mit einem Einlass, einem Auslass und einem Körperinnenraum;

einen im Körperinnenraum angeordneten doppelseitig wirkenden Kolben;

wobei der Kolben im Körperinnenraum zwischen einer ersten Stellung und einer zweiten Stellung verschiebbar ist;

wobei der Kolben in seiner ersten Stellung einen Durchfluss des Flüssiggases vom Einlass zum Auslass verhindert;

wobei die Vorrichtung zumindest in einer dritten Stellung des Kolbens zwischen der ersten Stellung und der zweiten Stellung einen Durchfluss des Flüssiggases vom Einlass zum Auslass zulässt;

wobei der Kolben eine dem Einlass zugewandte erste Kolbenseite mit einer ersten wirksamen Kolbenfläche F1 und eine dem Auslass zugewandte zweite Kolbenseite mit einer zweiten wirksamen Kolbenfläche F2 aufweist;

wobei die zweite wirksame Kolbenfläche größer ist als die erste wirksame Kolbenfläche.

2. Vorrichtung nach Aspekt 1, wobei die Vorrichtung geeignet ist, um mit Flüssiggas zu operieren, das am Einlass mit einem Druck im Bereich zwischen 1 bar und 16 bar, vorzugsweise zwischen 3 bar und 6 bar, bereitgestellt wird.

3. Vorrichtung nach Aspekt 1 oder 2, wobei sich die Größe der ersten wirksamen Kolbenfläche F1 in der ersten Stellung des Kolbens um 20% oder weniger, vorzugsweise 10% oder weniger, von der Größe der ersten wirksamen Kolbenfläche F1 in der zweiten und/oder dritten Stellung des Kolbens unterscheidet oder wobei die Größe der ersten wirksamen Kolbenfläche F1 in der ersten Stellung des Kolbens und in der dritten Stellung des Kolbens weiter bevorzugt gleich ist.

4. Vorrichtung nach einem der vorangehenden Aspekte, wobei sich die Größe der zweiten wirksamen Kolbenfläche F2 in der zweiten Stellung des Kolbens um 20% oder weniger, vorzugsweise 10% oder weniger, von der Größe der zweiten wirksamen Kolbenfläche F1 in der ersten und/oder dritten Stellung des Kolbens unterscheidet oder wobei die Größe der zweiten wirksamen Kolbenfläche F2 in der zweiten Stellung des Kolbens und in der dritten Stellung des Kolbens weiter bevorzugt gleich ist.

5. Vorrichtung nach einem der vorangehenden Aspekte, wobei die Vorrichtung derart konfiguriert ist, vorzugsweise die erste wirksame Kolbenfläche und die zweite wirksame Kolbenfläche derart aufeinander abgestimmt sind, dass der Kolben die erste Stellung einnimmt, wenn der Druck des Flüssiggases am Auslass größer ist als der fünfte Teil, bevorzugt der achte Teil, besonders bevorzugt der zehnte Teil des Drucks des Flüssiggases am Einlass.

6. Vorrichtung nach einem der vorangehenden Aspekte,

> wobei $F2 \geq 5 * F1$, vorzugsweise $F2 \geq 10 * F1$, vorzugsweise wobei $F2 \leq 50 * F1$ oder $F2 \leq 20 * F1$.

7. Vorrichtung nach einem der vorangehenden Aspekte, wobei die Vorrichtung in der zweiten Stellung des Kolbens einen wesentlichen Durchfluss des Flüssiggases vom Einlass zum Auslass verhindert.

8. Vorrichtung nach einem der vorangehenden Aspekte, wobei der Kolben die zweite Stellung einnimmt, wenn beim Auslass der Vorrichtung ein Druckabfall des Flüssiggases, vorzugsweise ein plötzlicher Druckabfall durch einen Schlauchabriss, auftritt.

9. Vorrichtung nach einem der vorangehenden Aspekte,

> wobei die Vorrichtung eine Längsachse aufweist;
> wobei der Innenraum des Körpers bezüglich der Längsachse im Wesentlichen rotationssymmetrisch ist;
> wobei der Kolben bezüglich der Längsachse im Wesentlichen rotationssymmetrisch ist.

10. Vorrichtung nach Aspekt 9, wobei der Einlass und der Auslass in einer Achse mit der Längsachse der Vorrichtung liegen.

11. Vorrichtung nach Aspekt 9 oder 10,

> wobei der Körperinnenraum einen ersten Innenraumabschnitt mit einem ersten Durchmesser und eine zweiten Innenraumabschnitt mit einem zweiten Durchmesser aufweist;
> wobei der erste Innenraumabschnitt näher beim Einlass ist als der zweite Innenraumabschnitt;
> wobei der zweite Durchmesser größer ist als der erste Durchmesser;
> wobei der Kolben einen ersten Kolbenabschnitt mit der ersten wirksamen Kolbenfläche und einen zweiten Kolbenabschnitt mit der zweiten wirksamen Kolbenfläche aufweist;
> wobei der erste Kolbenabschnitt zumindest teilweise im ersten Innenraumabschnitt angeordnet ist;
> wobei der zweite Kolbenabschnitt zumindest teilweise im zweiten Innenraumabschnitt angeordnet ist.

12. Vorrichtung nach Aspekt 11, ferner aufweisend:

> eine erste Dichtung zwischen dem ersten Kolbenabschnitt und dem ersten Innenraumabschnitt; und/oder
> eine zweite Dichtung zwischen dem zweiten Kolbenabschnitt und dem zweiten Innenraumabschnitt.

13. Vorrichtung nach Aspekt 11 oder 12, wobei der Körperinnenraum eine zwischen dem ersten Innenraumabschnitt und dem zweiten Innenraumabschnitt angeordnete Innenraumschulterfläche aufweist;
wobei der Kolben zwischen dem ersten Kolbenabschnitt und dem zweiten Kolbenabschnitt eine Kolbenschulterfläche aufweist.

14. Vorrichtung nach Aspekt 13, wobei ein Volumen zwischen der Innenraumschulterfläche und der Kolbenschulterfläche eingeschlossen ist, dessen Größe von der Stellung des Kolbens abhängt.

15. Vorrichtung nach Aspekt 14, wobei die Vorrichtung derart eingerichtet ist, dass das zwischen der Innenraumschulterfläche und der Kolbenschulterfläche eingeschlossene Volumen mit Umgebungsdruck beaufschlagt ist; und/oder
wobei der Körper eine Öffnung aufweist, welche das zwischen der Innenraumschulterfläche und der Kolbenschulterfläche eingeschlossene Volumen mit der Umgebung verbindet.

16. Vorrichtung nach Aspekt 14 oder 15, wobei die Vorrichtung im zwischen der Innenraumschulterfläche und der Kolbenschulterfläche eingeschlossenen Volumen keine Krafteinrichtung aufweist, die eingerichtet ist, um eine Kraft auf den Kolben in Richtung der ersten und/oder zweiten Stellung auszuüben.

17. Vorrichtung nach einem der vorangehenden Aspekte, wobei die Vorrichtung keine Krafteinrichtung aufweist, die eingerichtet ist, um eine Kraft auf den Kolben in Richtung der ersten und/oder zweiten Stellung auszuüben.

18. Vorrichtung nach einem der vorangehenden Aspekte, ferner aufweisend:
eine Krafteinrichtung, vorzugsweise eine Federeinrichtung, eingerichtet zum Anwenden einer Kraft in Richtung der zweiten Stellung auf den Kolben, wenn sich der Kolben in der ersten Stellung befindet.

19. Vorrichtung nach Aspekt 18,

> wobei die Kraft der Krafteinrichtung derart konfiguriert ist, dass die Krafteinrichtung den Kolben in Richtung der zweiten Stellung bewegt, wenn der Druck des Flüssiggases am Einlass und am Auslass so gering ist, dass der Druck des Flüssiggases am Auslass einen Schwellwert unterschreitet;

wobei der Schwellwert vorzugsweise kleiner oder gleich ist als 0,1 bar, bevorzugt 0,03 bar.

20. Vorrichtung nach Aspekt 18 oder 19 und einem der Aspekte 13 bis 15, wobei die Federeinrichtung eine Druckkraft auf die Innenraumschulterfläche und die Kolbenschulterfläche ausübt, wenn sich der Kolben in der ersten Stellung befindet.

21. Vorrichtung nach einem der vorangehenden Aspekte,

wobei der Körperinnenraum einen ersten Anschlag aufweist;

wobei die erste Kolbenseite in der ersten Stellung des Kolbens abdichtend am ersten Anschlag anliegt und so den Durchfluss des Flüssiggases vom Einlass zum Auslass verhindert.

22. Vorrichtung nach einem der vorangehenden Aspekte,

wobei der Körperinnenraum einen zweiten Anschlag aufweist;

wobei die zweite Kolbenseite in der zweiten Stellung des Kolbens abdichtend am zweiten Anschlag anliegt und so den wesentlichen Durchfluss des Flüssiggases vom Einlass zum Auslass verhindert.

23. Vorrichtung nach einem der vorangehenden Aspekte,

wobei der Kolben eine von der ersten Kolbenseite zur zweiten Kolbenseite durchgehende Bohrung aufweist;

wobei die Vorrichtung in der dritten Stellung des Kolbens einen Durchfluss des Flüssiggases vom Einlass durch die Bohrung des Kolbens zum Auslass zulässt.

24. Vorrichtung nach Aspekt 23, wobei der erste Anschlag in der ersten Stellung des Kolbens an einer Kante der Bohrung des Kolbens auf der ersten Kolbenseite anliegt.

25. Vorrichtung nach Aspekt 238 oder 24, wobei der zweite Anschlag in der zweiten Stellung des Kolbens an einer Kante der Bohrung des Kolbens auf der zweiten Kolbenseite anliegt.

26. Vorrichtung nach Aspekt 22 oder 25, wobei die Vorrichtung eine Umgehung für den zweiten Anschlag bereitstellt, um in der zweiten Stellung des Kolbens einen geringfügigen Durchfluss des Flüssiggases vom Einlass zum Auslass zuzulassen.

27. Vorrichtung nach Aspekt 26, wobei die Umgehung senkrecht zur Flussrichtung des Gases einen lichten Querschnitt von weniger als 0,7 mm$^2$ oder bevorzugt von weniger als 0,2 mm$^2$ aufweist.

28. Vorrichtung nach Aspekt 26 oder 27, wobei die Umgehung vorzugsweise durch einen Umgehungskanal im Körper und/oder im Kolben und/oder im zweiten Anschlag und/oder in einer Dichtung, die am zweiten Anschlag anliegt, bereitgestellt ist.

29. Vorrichtung nach Aspekt 26, 27 oder 28, wobei der Umgehungskanal vorzugsweise durch eine Bohrung im zweiten Anschlag bereitgestellt ist.

30. Vorrichtung nach einem der vorangehenden Aspekte, wobei die Vorrichtung eine Betätigungseinrichtung aufweist, um den Kolben manuell aus der zweiten Stellung heraus zu bewegen.

31. Flüssiggasleitungssystem aufweisend:

eine Flüssiggasquelle, vorzugsweise eine Flüssiggasflasche; und
eine Vorrichtung nach einem der vorangehenden Aspekte;
wobei die Vorrichtung vorzugsweise unmittelbar am Auslass der Flüssiggasquelle angeschlossen ist.

32. Fahrzeug, vorzugsweise Caravan oder Reisemobil, aufweisend eine Vorrichtung nach einem der Aspekte 1 bis 30 oder ein Leitungssystem nach Aspekt 31.

33. Verwendung einer Vorrichtung zur Verhinderung einer Rückverflüssigung eines Flüssiggases in einem Flüssiggasleitungssystem, vorzugsweise nach einem der Aspekte 1 bis 30, in einem Leitungssystem, vorzugsweise nach Aspekt 31, oder einem Fahrzeug, vorzugsweise nach Aspekt 32.

Weitere Ausführungsformen, Aspekte und Details der Erfindung werden mit Bezug auf die in den Zeichnungen gezeigten Ausführungsbeispiele der Erfindung beschrieben. Hierbei bezeichnen gleiche Bezugszeichen gleiche oder entsprechende Elemente. Gleiche oder entsprechende Elemente können jedoch auch mit unterschiedlichen Bezugszeichen bezeichnet sein. Die Zeichnungen stellen eine beispielhafte Ausführung der Erfindung dar, sollen den Gegenstand der Erfindung jedoch nicht einschränken.

Es zeigen:

Fig. 1 eine perspektivische Schnittansicht einer Vorrichtung zur Verhinderung einer Rückverflüssigung eines Flüssiggases in einem Flüssiggasleitungssystem;

Fig. 2A eine Querschnittansicht der in Fig. 1 gezeigten Vorrichtung mit dem Kolben in der ersten Stellung;

Fig. 2B eine Querschnittansicht der in Fig. 1 gezeigten Vorrichtung mit dem Kolben in der dritten Stellung;

Fig. 2C eine Querschnittansicht der in Fig. 1 gezeigten Vorrichtung mit dem Kolben in der zweiten Stellung;

Fig. 3 ein Flüssiggasleitungssystem aufweisend eine Gasflasche mit einer daran angeschlossenen Vorrichtung zur Verhinderung einer Rückverflüssigung eines Flüssiggases in dem Flüssiggasleitungssystem;

Fig. 4 ein Fahrzeug.

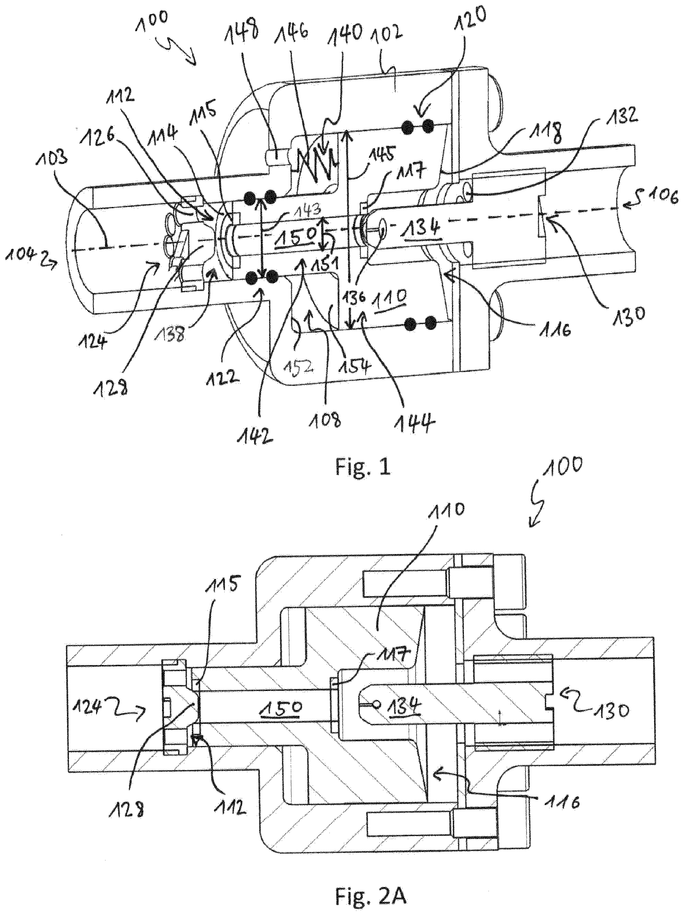

In Figur 1 ist eine Vorrichtung 100 zur Verhinderung einer Rückverflüssigung eines Flüssiggases in einem Flüssiggasleitungssystem gezeigt. Die Vorrichtung 100 weist einen Körper 102 mit einem Einlass 104, einem Auslass 106 und einem Körperinnenraum 108 auf. Im Körperinnenraum 108 ist ein doppelseitig wirkender Kolben 110 angeordnet. Der Körper 102 und der Kolben 110 sind um eine Längsachse 103 der Vorrichtung im Wesentlichen rotationssymmetrisch. Der Kolben 110 ist derart im Körperinnenraum 108 gelagert, dass er nur entlang der der Längsachse 106, d.h. in Axialrichtung, bewegbar ist.

Der Kolben 110 weist eine erste Kolbenseite 112, die dem Einlass 104 zugewandt ist, und eine zweite Kolbenseite 116 auf, die dem Auslass 106 zugewandt ist. Die erste Kolbenseite 112 weist eine erste wirksame Kolbenfläche F1 114 und die zweite Kolbenseite 116 weist eine zweite wirksame Kolbenfläche F2 118 auf. Unter der ersten wirksamen Kolbenfläche 114 ist eine Projektion der ersten Kolbenseite 112 entlang der Längsachse 103, d.h. in Axialrichtung des Kolbens, auf eine gedachte, senkrecht zur Längsachse 103 angeordnete Projektionsfläche zu verstehen. Ebenso ist unter der zweiten wirksamen Kolbenfläche 118 eine Projektion der zweiten Kolbenseite 116 entlang der Längsachse 103, d.h. in Axialrichtung des Kolbens, auf eine gedachte, senkrecht zur Längsachse 103 angeordnete Projektionsfläche zu verstehen. Mit anderen Worten ist unter der ersten wirksamen Kolbenfläche 114 die Fläche der ersten Kolbenseite 112 zu verstehen, auf die der im Bereich des Einlasses 104 herrschende Druck des Flüssiggases wirkt, um den Kolben 102 in Axialrichtung zu bewegen. Analog ist unter der zweiten wirksamen Kolbenfläche 118 die Fläche der zweiten Kolbenseite 116 zu verstehen, auf die der im Bereich des Auslasses 106 herrschende Druck des Flüssiggases wirkt, um den Kolben 102 in Axialrichtung zu bewegen. Weiterhin weist der Kolben eine Bohrung 150 zwischen der ersten Kolbenseite 112 und der zweiten Kolbenseite 116 auf, wobei die Bohrung 150 einen Durchmesser (DK) 151 von beispielsweise ca. 4 mm aufweist. Wie der Fachmann erkennen wird, muss die Bohrung 150 nicht unbedingt durch Bohren hergestellt werden. Es kann sich hierbei auch um ein anderweitig hergestelltes Durchgangsloch handeln.

Der Körperinnenraum 108 weist einen ersten Innenraumabschnitt 138 und einen zweiten Innenraumabschnitt 140 auf. Der Kolben 110 weist entsprechend einen ersten Kolbenabschnitt 142 und einen zweiten Kolbenabschnitt 144 auf, wobei der erste Kolbenabschnitt 142 zumindest teilweise im ersten Innenraumabschnitt 138 aufgenommen ist und der zweite Kolbenabschnitt 144 im zweiten Innenraumabschnitt 140 aufgenommen ist. Je nach Stellung des Kolbens 110 ist der erste Kolbenabschnitt 142 weiter oder weniger weit im ersten Innenraumabschnitt 138 angeordnet. Der erste Innenraumabschnitt 138 und der erste Kolbenabschnitt weisen beispielsweise jeweils einen Durchmesser (D1) 143 von ca. 10 mm auf, wobei der Durchmesser des ersten Kolbenabschnitts 142 geringfügig, vorzugsweise um 0,1 mm, kleiner als der Durchmesser des ersten Innenraumabschnitts 138 ist, um eine gleitende Lagerung des Kolbens 110 im Körperinnenraum 108 zu gewährleisten. Entsprechend weisen der zweite Innenraumabschnitt 140 und der zweite Kolbenabschnitt 144 beispielsweise einen Durchmesser (D2) 145 von ca. 25 mm auf, wobei der Durchmesser des zweiten Kolbenabschnitts 144 geringfügig, vorzugsweise um 0,1 mm, kleiner als der Durchmesser des zweiten Innenraumabschnitts 140 ist.

Zwischen dem ersten Kolbenabschnitt 142 und dem ersten Innenraumabschnitt 138 ist eine erste Dichtung 122 angeordnet, die beispielsweise in Form von zwei am ersten Kolbenabschnitt 142 angebrachten und axial voneinander beanstandeten Ringdichtungen ausgebildet sind.

Entsprechend ist zwischen dem zweiten Kolbenabschnitt 144 und dem zweiten Innenraumabschnitt 140 eine zweite Dichtung 120 angeordnet, die beispielsweise in Form von zwei am zweiten Kolbenabschnitt 144 angebrachten und axial voneinander beabstandeten Ringdichtungen ausgebildet sind.

Mit dem ersten Durchmesser (D1) 143, dem zweiten Durchmesser (D2) 145 und dem Durchmesser (DK) 151 der Bohrung 150 durch den Kolben 110 beträgt die erste wirksame Kolbenfläche (F1) 114

$$F1 = \frac{\pi}{4}\left(D1^2 - DK^2\right).$$

Entsprechend beträgt die zweite wirksame Kolbenfläche (F2) 116

$$F2 = \frac{\pi}{4} \left( D2^2 - DK^2 \right).$$

Die Vorrichtung 100 weist weiterhin einen ersten Anschlag 124 und einen zweiten Anschlag 130 auf, die jeweils in dem Körperinnenraum 108 eingepasst sind. Der erste Anschlag 124 ist zwischen dem Einlass 104 und dem ersten Innenraumabschnitt 138 angeordnet und der zweite Anschlag 130 ist zwischen dem Auslass 106 und dem zweiten Innenraumabschnitt 140 angeordnet.

Der erste Anschlag 124 weist einen in den ersten Innenraumabschnitt 140 ragenden ersten zentralen Vorsprung 128 sowie eine oder mehrere um den ersten zentralen Vorsprung 128 angeordnete erste Durchgangsöffnungen 126 auf. Der erste zentrale Vorsprung 128 ist eingerichtet, um die Öffnung der Bohrung 150 auf der ersten Kolbenseite 112 zu verschließen. Dazu weist die erste Kolbenseite 112 vorzugsweise eine um die Öffnung der Bohrung 150 angeordnete ringförmige Dichtung 115 auf, die eingerichtet ist, um am ersten zentralen Vorsprung 128 dichtend anzuliegen, um die Öffnung der Bohrung 150 auf der ersten Kolbenseite 112 gasdicht zu verschließen. Die ersten Durchgangsöffnungen 126 gewährleisten, dass das Flüssiggas durch den ersten Anschlag 124 fließen kann, wenn sich der Kolben 110 nicht in der ersten Stellung befindet. Entsprechend weist der zweite Anschlag 130 einen in den zweiten Innenraumabschnitt 140 ragenden zweiten zentralen Vorsprung 134 sowie eine oder mehrere um den zweiten zentralen Vorsprung 134 angeordnete zweite Durchgangsöffnungen 132 auf. Der zweite zentrale Vorsprung 134 ist eingerichtet, um die Öffnung der Bohrung 150 auf der zweiten Kolbenseite 116 zu verschließen. Dazu weist die zweite Kolbenseite 116 vorzugsweise eine um die Öffnung der Bohrung 150 angeordnete ringförmige Dichtung 117 auf, die eingerichtet ist, um am zweiten zentralen Vorsprung 134 dichtend anzuliegen, um die Öffnung der Bohrung 150 auf der zweiten Kolbenseite 116 gasdicht zu verschließen. Die zweiten Durchgangsöffnungen 132 gewährleisten, dass das Flüssiggas durch den zweiten Anschlag 130 fließen kann, wenn sich der Kolben 110 nicht in der zweiten Stellung befindet.

Die Vorrichtung weist ferner eine Umgehung 136 auf, die beispielsweise in Form einer Bohrung im zweiten zentralen Vorsprung 134 des zweiten Anschlags vorgesehen sein kann.

Zwischen dem ersten Innenraumabschnitt 138 und dem zweiten Innenraumabschnitt 140 weist der Körper 102 eine ringförmige Innenraumschulterfläche 152 auf, die beispielsweise senkrecht zur Achse 103 ausgerichtet ist. Entsprechend weist der Kolben 110 zwischen dem ersten Kolbenabschnitt 142 und dem zweiten Kolbenabschnitt 144 eine ringförmige Kolbenschulterfläche 154 auf, die beispielsweise senkrecht zur Achse 103 ausgerichtet ist.

Zwischen der Innenraumschulterfläche 152 und der Kolbenschulterfläche 154 wird ein Volumen eingeschlossen, dessen Größe abhängig von der Stellung des Kolbens 110 variiert. Da dieses Volumen aufgrund der Dichtungen 120, 122 gegenüber dem Einlass 104 und dem Auslass 106 abgedichtet ist, ist eine Bohrung und/oder Öffnung im Körper 148 vorgesehen, die dieses Volumen mit der Umgebung verbindet, um eine Bewegung des Kolbens 110 im Körperinnenraum 108 zu gewährleisten.

Zwischen der Innenraumschulterfläche 152 und der Kolbenschulterfläche 154 kann eine Krafteinrichtung 146 angeordnet sein, die beispielsweise in Form einer um den ersten Kolbenabschnitt 142 angeordneten Spiralfeder ausgebildet sein kann. Diese Krafteinrichtung 146 kann wie hierin offenbart zum einen eine zuverlässige Funktion der Vorrichtung gewährleisten, wenn sich der Kolben in der ersten Stellung befindet, und zum anderen, dass die Flüssiggasquelle vollständig oder fast vollständig entleert werden kann.

Bevorzugt weist die Vorrichtung j edoch keine solche Krafteinrichtung auf. Beispielsweise kann die zuverlässige Funktion der Vorrichtung 100 auch gewährleistet werden, indem z.B. die Dichtungen 122 und 120 in Form von Lippendichtungen bereitgestellt werden.

Nachfolgend wird mit Bezug auf die Fig. 2A bis 2C die Funktionsweise der Vorrichtung erläutert. Lediglich der Übersichtlichkeit halber, sind in diesen Figuren nicht alle Elemente der Vorrichtung mit Bezugszeichen versehen.

In Fig. 2A ist die in Fig. 1 gezeigte Vorrichtung 100 in einem Zustand gezeigt, in dem sich der Kolben 110 in einer ersten Stellung befindet. In der ersten Stellung verschließt der erste Anschlag 124 die auf der ersten Kolbenseite 112 angeordnete Öffnung der Bohrung 150, so dass die Vorrichtung 100 einen Durchfluss des Flüssiggases vom Einlass 104 zum Auslass 106 verhindert. Das heißt, vorzugsweise liegt die auf der ersten Kolbenseite 112 um die Öffnung der Bohrung 150 vorgesehene Dichtung 115 gasdicht am zentralen Vorsprung 128 des ersten Anschlags 124 an.

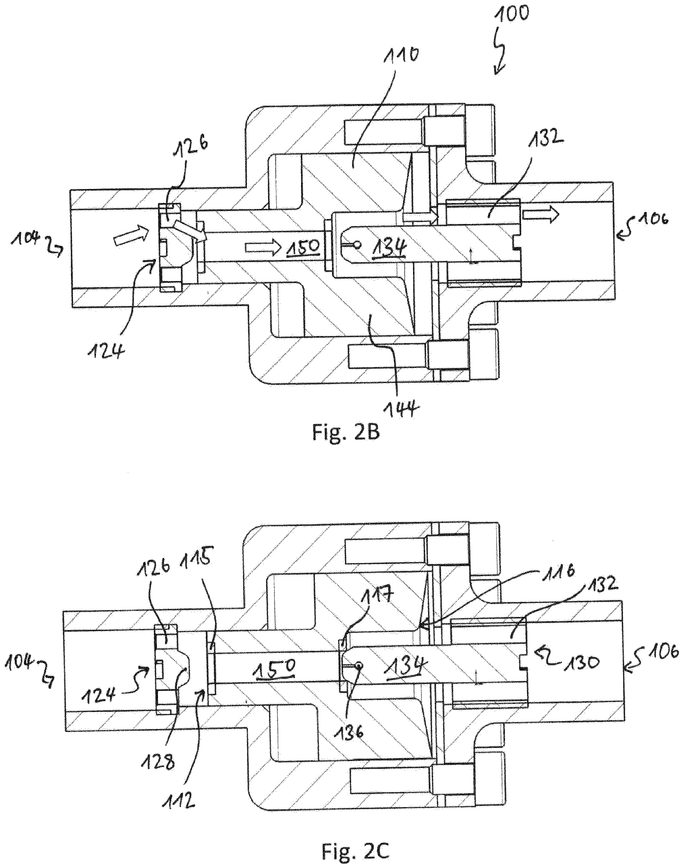

In Fig. 2C ist die in Fig. 1 gezeigte Vorrichtung in einem Zustand gezeigt, in dem sich der Kolben 110 in einer zweiten Stellung befindet. In der zweiten Stellung verschließt der zweite Anschlag 130 die auf der zweiten Kolbenseite 116 angeordnete Öffnung der Bohrung 150, so dass die Vorrichtung 100 einen wesentlichen Durchfluss des Flüssiggases vom Einlass 104 zum Auslass 106 verhindert. Das heißt, vorzugsweise liegt die auf der zweiten Kolbenseite 116 vorgesehene Dichtung 117 gasdicht am zentralen Vorsprung 134 des zweiten Anschlags 130 an.

In Fig. 2B ist die in Fig. 1 gezeigte Vorrichtung in einem Zustand gezeigt, in dem sich der Kolben 110 in einer dritten Stellung zwischen der ersten und zweiten Stellung befindet. In der dritten Stellung liegen weder die auf der ersten Kolbenseite 112 vorgesehene Dichtung 115 am ersten zentralen Vorsprung 128 des ersten Anschlags 124 noch die auf der zweiten Kolbenseite 116 vorgesehene Dichtung 117 auf der zweiten Kolbenseite am zweiten zentralen Vorsprung 134 des zweiten Anschlags 130 an.

Wenn sich der Kolben 110 wie in Fig. 2B gezeigt in der dritten Stellung befindet, wird ein anhand von Pfeilen gezeigter Durchfluss von Flüssiggas vom Einlass 104 durch die ersten Durchgangsbohrungen 126 des ersten Anschlags, die Bohrung 150 des Kolbens 110 und die zweiten Durchgangsbohrungen 132 des zweiten Anschlags 130 zum Auslass 106 ermöglicht. Auf diese Weise haben der erste Anschlag 128 und der zweite Anschlag 130 keinen wesentlichen Einfluss auf die Größe der ersten wirksamen Kolbenfläche F1 und der zweiten wirksamen Kolbenfläche.

Wenn der Druck des Flüssiggases am Auslass $p2$ den Grenzwert $p1 \cdot {F1}/{F_2}$ übersteigt (idealisierte Betrachtung), wird auf den Koben 110 eine in axialer Richtung zum Auslass 104 gerichtete Kraft ausgeübt, so dass sich der Kolben 110 in die in Fig. 2A gezeigte erste Stellung bewegt. Auf diese Weise verschließt der Kolben 110 die Vorrichtung 100 und der Druck des Flüssiggases kann im am Auslass 104 angeschlossenen Teil des Flüssiggasleitungssystems nicht weiter ansteigen.

Wenn der Druck des Flüssiggases am Auslass 106, beispielsweise aufgrund eines Verbrauchers (z.B. einer Gasheizung), wieder unter den oben genannten Grenzwert sinkt, bewegt sich der Kolben 110 wieder von der ersten Stellung weg in die in Fig. 2C gezeigte dritte Stellung, so dass wieder ein Durchfluss des Flüssiggases vom Einlass 104 zum Auslass 106 zugelassen wird. In der Praxis bewegt sich der Kolben je nach Druck am Einlass 104 und Auslass 106 dynamisch zwischen der ersten Stellung und der dritten Stellung.

Wenn am Auslass 106 beispielsweise aufgrund eines Schlauchabrisses im Flüssiggasleitungssystem ein plötzlicher Druckabfall auftritt, wird die zweite Kolbenseite 116 nicht mehr mit Druck oder nur noch mit einem geringen Druck beaufschlagt, so dass auf den Kolben 110 eine in axialer Richtung zum Auslass 106 gerichtete Kraft ausgeübt wird. Der Kolben 110 wird daher in die zweite Stellung bewegt, in der ein wesentlicher Durchfluss des Flüssiggases vom Einlass 104 zum Auslass 106 verhindert wird. Mit anderen Worten funktioniert die Vorrichtung 100 auch als Schlauchabriss- und/oder Schlauchbruchsicherung.

Die Vorrichtung 100 kann jedoch vorzugsweise mittels der Umgehung 136 in der zweiten Stellung des Kolbens 110 einen geringfügigen Durchfluss von Flüssiggas vom Einlass 104, durch die ersten Durchgangsöffnungen 126 des ersten Anschlags 124, die Bohrung 150 des Kolbens 110, die im zentralen Vorsprung 134 des zweiten Anschlags 130 vorgesehene Umgehung 136 und die zweiten Durchgangsöffnungen 132 des zweiten Anschlags 130 zum Auslass 106 bereitstellen. Auf diese Weise kann der Druck am Auslass 106 wieder aufgebaut werden, wenn die Störung (z.B. der Schlauchabriss) behoben wurde oder wenn sich der Kolben 110 lediglich aufgrund einer Fehlbedienung oder eines sonstigen Fehlers in die zweite Stellung bewegt hat.

Die Vorrichtung 100 kann zudem eine nicht gezeigte Betätigungsvorrichtung aufweisen, mit welcher ein Benutzer den Kolben 110 manuell von der zweiten Stellung in die dritte Stellung bewegen kann.

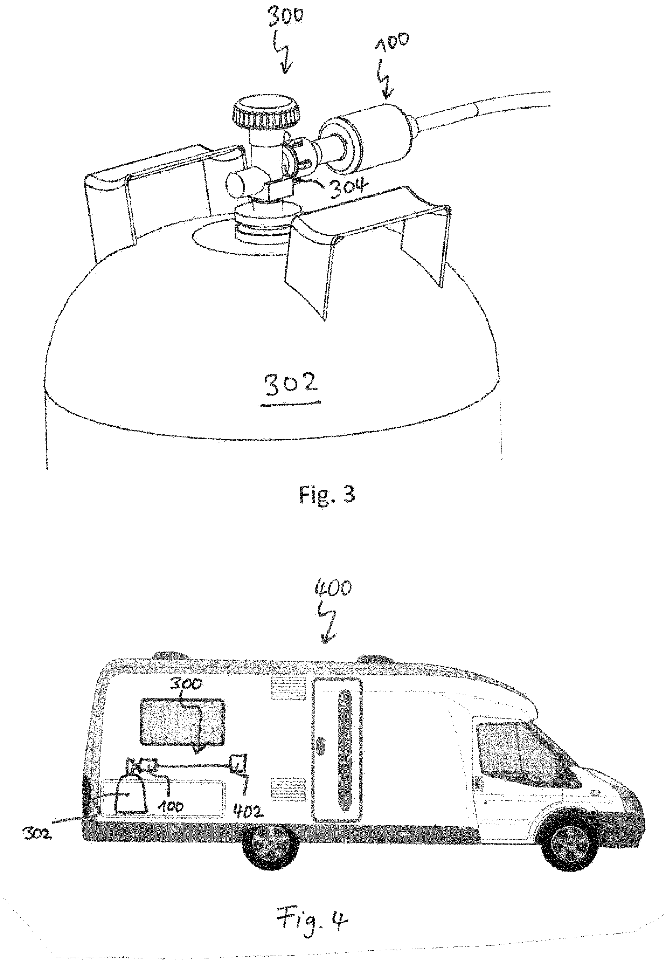

In Fig. 3 ist ein Flüssiggasleitungssystem 300 mit einer als Gasflasche 302 ausgebildeten Flüssiggasquelle und der hierin offenbarten Vorrichtung 100 zur Verhinderung einer Rückverflüssigung des Flüssiggases in dem Flüssiggasleitungssystem 300 gezeigt. In Fig. 3 ist gezeigt, dass die Vorrichtung unmittelbar am Auslass 304 der Gasflasche 302 angeschlossen ist, d.h. ohne Zwischenschaltung eines Schlauches, eines Druckreglers und/oder einer Schlauchbruchsicherung. Das Flüssiggasleitungssystem 300 kann stromabwärts der Vorrichtung 100 weitere Komponenten bzw. Armaturen aufweisen, beispielsweise einen Druckregler, einen Gasfilter, ein Crashventil und einen oder mehrere Verbraucher.

In Fig. 4 ist ein Fahrzeug 400, hier beispielsweise ein Reisemobil, gemäß einem Ausführungsbeispiel der Erfindung gezeigt. Das Fahrzeug weist ein Flüssiggasleitungssystem 300 mit einer Flüssiggasquelle 302, der hierin offenbarten Vorrichtung zur Verhinderung einer Rückverflüssigung des Flüssiggases in dem Flüssiggasleitungssystem 300 sowie weiteren Komponenten, Armaturen und/oder einem oder mehreren Verbrauchern 402 auf.

**Patentansprüche**

1. Vorrichtung (100) zur Verhinderung einer Rückverflüssigung eines Flüssiggases in einem Flüssiggasleitungssystem (300), aufweisend:

   einen Körper (102) mit einem Einlass (104), einem Auslass (106) und einem Körperinnenraum (108);
   einen im Körperinnenraum (108) angeordneten doppelseitig wirkenden Kolben (110);
   wobei der Kolben (110) im Körperinnenraum (108) zwischen einer ersten Stellung und einer zweiten Stellung verschiebbar ist;
   wobei der Kolben (110) in seiner ersten Stellung einen Durchfluss des Flüssiggases vom Einlass (104) zum Auslass (106) verhindert;
   wobei die Vorrichtung (100) zumindest in einer dritten Stellung des Kolbens (110) zwischen der ersten Stellung und der zweiten Stellung einen Durchfluss des Flüssiggases vom Einlass (104) zum Auslass (106) zulässt;
   wobei der Kolben (110) eine dem Einlass (104) zugewandte erste Kolbenseite (112) mit einer ersten wirksamen Kolbenfläche F1 (114) und eine dem Auslass (106) zugewandte zweite Kolbenseite (116) mit einer zweiten wirksamen Kolbenfläche F2 (118) aufweist;
   wobei die zweite wirksame Kolbenfläche F2 (118) größer ist als die erste wirksame Kolbenfläche F1 (114);

wobei die Vorrichtung (100) geeignet ist, um mit Flüssiggas zu operieren, das am Einlass (104) mit einem Druck im Bereich zwischen 1 bar und 16 bar, vorzugsweise zwischen 3 bar und 6 bar, bereitgestellt wird.

2. Vorrichtung nach Anspruch 1,

wobei sich die Größe der ersten wirksamen Kolbenfläche F1 in der ersten Stellung des Kolbens um 20% oder weniger, vorzugsweise 10% oder weniger, von der Größe der ersten wirksamen Kolbenfläche F1 in der zweiten und/oder dritten Stellung des Kolbens unterscheidet, wobei die Größe der ersten wirksamen Kolbenfläche F1 in der ersten Stellung des Kolbens und der dritten Stellung des Kolbens weiter bevorzugt gleich ist; und/oder

wobei $F2 \leq 50 * F1$, besonders bevorzugt $F2 \leq 20 * F1$, wenn der Kolben in der ersten Stellung ist.

3. Vorrichtung (100) nach Anspruch 1 oder 2,

wobei die Vorrichtung (100) derart konfiguriert ist, vorzugsweise die erste wirksame Kolbenfläche F1 (114) und die zweite wirksame Kolbenfläche F2 (118) derart aufeinander abgestimmt sind, dass der Kolben (110) die erste Stellung einnimmt, wenn der Druck des Flüssiggases am Auslass (106) größer ist als der fünfte Teil, bevorzugt der achte Teil, besonders bevorzugt der zehnte Teil des Drucks des Flüssiggases am Einlass (104); und/oder

wobei $F2 \geq 5 * F1$, vorzugsweise $F2 \geq 10 * F1$.

4. Vorrichtung (100) nach einem der vorangehenden Ansprüche, wobei die Vorrichtung (100) in der zweiten Stellung des Kolbens (110) einen wesentlichen Durchfluss des Flüssiggases vom Einlass (104) zum Auslass verhindert (106);

vorzugsweise wobei der Kolben (100) die zweite Stellung einnimmt, wenn beim Auslass (106) der Vorrichtung (100) ein Druckabfall des Flüssiggases, vorzugsweise ein plötzlicher Druckabfall durch einen Schlauchabriss, auftritt.

5. Vorrichtung nach (100) einem der vorangehenden Ansprüche,

wobei die Vorrichtung (100) eine Längsachse (103) aufweist;

wobei der Innenraum (108) des Körpers (102) bezüglich der Längsachse (103) im Wesentlichen rotationssymmetrisch ist;

wobei der Kolben (120) bezüglich der Längsachse (103) im Wesentlichen rotationssymmetrisch ist.

6. Vorrichtung (100) nach Anspruch 5,

wobei der Körperinnenraum (108) einen ersten Innenraumabschnitt (138) mit einem ersten Durchmesser (143) und eine zweiten Innenraumabschnitt (140) mit einem zweiten Durchmesser (145) aufweist;

wobei der erste Innenraumabschnitt (138) näher beim Einlass (104) ist als der zweite Innenraumabschnitt (140);

wobei der zweite Durchmesser (145) größer ist als der erste Durchmesser (143);

wobei der Kolben (110) einen ersten Kolbenabschnitt (142) mit der ersten wirksamen Kolbenfläche (114) und einen zweiten Kolbenabschnitt (144) mit der zweiten wirksamen Kolbenfläche (118) aufweist;

wobei der erste Kolbenabschnitt (142) zumindest teilweise im ersten Innenraumabschnitt (138) angeordnet ist;

wobei der zweite Kolbenabschnitt (144) zumindest teilweise im zweiten Innenraumabschnitt (140) angeordnet ist.

7. Vorrichtung (100) nach Anspruch 6, ferner aufweisend:

eine erste Dichtung (122) zwischen dem ersten Kolbenabschnitt (142) und dem ersten Innenraumabschnitt (138); und/oder

eine zweite Dichtung (120) zwischen dem zweiten Kolbenabschnitt (144) und dem zweiten Innenraumabschnitt (140).

8. Vorrichtung nach Anspruch 6 oder 7,

wobei der Körperinnenraum eine zwischen dem ersten Innenraumabschnitt und dem zweiten Innenraumabschnitt angeordnete Innenraumschulterfläche aufweist;

wobei der Kolben zwischen dem ersten Kolbenabschnitt und dem zweiten Kolbenabschnitt eine Kolbenschulterfläche aufweist;

wobei ein Volumen zwischen der Innenraumschulterfläche und der Kolbenschulterfläche eingeschlossen ist, dessen Größe von der Stellung des Kolbens abhängt;

wobei:

die Vorrichtung derart eingerichtet ist, dass das zwischen der Innenraumschulterfläche und der Kolbenschulterfläche eingeschlossene Volumen mit Umgebungsdruck beaufschlagt ist; und/oder

der Körper eine Öffnung aufweist, welche das zwischen der Innenraumschulterfläche und der Kolbenschulterfläche eingeschlossene Volumen mit der Umgebung verbindet.

9. Vorrichtung (100) nach einem der vorangehenden Ansprüche, wobei die Vorrichtung keine Krafteinrichtung aufweist, die eingerichtet ist, um eine Kraft auf den Kolben in Richtung der ersten und/oder zweiten Stellung auszuüben.

10. Vorrichtung (100) nach einem der vorangehenden Ansprüche,

wobei der Körperinnenraum (108) einen ersten Anschlag (124) aufweist;
wobei die erste Kolbenseite (112) in der ersten Stellung des Kolbens (110) abdichtend am ersten Anschlag (124) anliegt und so den Durchfluss des Flüssiggases vom Einlass (104) zum Auslass (106) verhindert;
wobei der Körperinnenraum (108) einen zweiten Anschlag (130) aufweist;
wobei die zweite Kolbenseite (116) in der zweiten Stellung des Kolbens (110) abdichtend am zweiten Anschlag (130) anliegt und so den wesentlichen Durchfluss des Flüssiggases vom Einlass (104) zum Auslass (106) verhindert.

11. Vorrichtung (100) nach einem der vorangehenden Ansprüche,

wobei der Kolben (110) eine von der ersten Kolbenseite (112) zur zweiten Kolbenseite (116) durchgehende Bohrung (150) aufweist;
wobei die Vorrichtung (100) in der dritten Stellung des Kolbens (110) einen Durchfluss des Flüssiggases vom Einlass (104) durch die Bohrung (150) des Kolbens (110) zum Auslass (106) zulässt.

12. Vorrichtung (100) nach Anspruch 11, wobei der erste Anschlag (124) in der ersten Stellung des Kolbens (110) an einer Kante der Bohrung (150) des Kolbens (110) auf der ersten Kolbenseite (112) anliegt; und/oder
wobei der zweite Anschlag (130) in der zweiten Stellung des Kolbens (110) an einer Kante der Bohrung (150) des Kolbens (110) auf der zweiten Kolbenseite (116) anliegt.

13. Vorrichtung (100) nach Anspruch 10 oder 12, wobei die Vorrichtung (100) eine Umgehung (136) für den zweiten Anschlag (130) bereitstellt, um in der zweiten Stellung des Kolbens (110) einen geringfügigen Durchfluss des Flüssiggases vom Einlass (104) zum Auslass (106) zuzulassen;

wobei die Umgehung (136) vorzugsweise senkrecht zur Flussrichtung des Gases einen lichten Querschnitt von weniger als 0,7 mm$^2$ oder bevorzugt von weniger als 0,2 mm$^2$ aufweist;
wobei die Umgehung (136) vorzugsweise durch einen Umgehungskanal im Körper (102) und/oder im Kolben (110) und/oder im zweiten Anschlag (130) und/oder in einer Dichtung (117), die am zweiten Anschlag anliegt, bereitgestellt ist, wobei der Umgehungskanal besonders bevorzugt durch eine Bohrung im zweiten Anschlag (130) bereitgestellt ist.

14. Vorrichtung (100) nach einem der vorangehenden Ansprüche, wobei die Vorrichtung (100) eine Betätigungseinrichtung aufweist, um den Kolben (110) manuell aus der zweiten Stellung heraus zu bewegen.

15. Flüssiggasleitungssystem (300) aufweisend:

eine Flüssiggasquelle (302), vorzugsweise eine Flüssiggasflasche; und
eine Vorrichtung (100) nach einem der vorangehenden Ansprüche;
wobei die Vorrichtung (100) vorzugsweise unmittelbar am Auslass (304) der Flüssiggasquelle (302) angeschlossen ist.

16. Fahrzeug (400), vorzugsweise Caravan oder Reisemobil, aufweisend eine Vorrichtung (100) nach einem der Ansprüche 1 bis 14 oder ein Leitungssystem (300) nach Anspruch 15.

Fig. 1

Fig. 2A

Fig. 2B

Fig. 2C

Fig. 3

Fig. 4

Europäisches
Patentamt

European
Patent Office

Office européen
des brevets

# EUROPÄISCHER RECHERCHENBERICHT

**Nummer der Anmeldung**

**EP 22 15 4932**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/101666 A1 (PECHTOLD RAINER [DE] ET AL) 29. April 2010 (2010-04-29) * Absätze [0006], [0028], [0030]; Abbildungen 1,2 * ----- | 1-16 | INV. G05D16/10 |
| X | US 9 891 635 B1 (ROWE CARROLL G [US]) 13. Februar 2018 (2018-02-13) * Spalte 2, Zeile 52 – Spalte 3, Zeile 9; Abbildungen 1,2 * ----- | 1,3-7, 10-12, 14-16 | |
| X | WO 2005/124493 A1 (TOYOTA MOTOR CO LTD [JP]; TOYOTA JIDOSHOKKI KK [JP] ET AL.) 29. Dezember 2005 (2005-12-29) * Abbildungen 1-4 * ----- | 1,3-7, 10-16 | |

**RECHERCHIERTE SACHGEBIETE (IPC)**

G05D

Der vorliegende Recherchenbericht wurde für alle Patentansprüche erstellt

| Recherchenort | Abschlußdatum der Recherche | Prüfer |
|---|---|---|
| München | 10. Mai 2022 | Camerer, Stephan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 4932

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-05-2022

| Im Recherchenbericht angeführtes Patentdokument | Datum der Veröffentlichung | Mitglied(er) der Patentfamilie | Datum der Veröffentlichung |
|---|---|---|---|
| US 2010101666 A1 | 29-04-2010 | CN 101725827 A<br>DE 102009050647 A1<br>US 2010101666 A1<br>US 2015268672 A1 | 09-06-2010<br>15-07-2010<br>29-04-2010<br>24-09-2015 |
| US 9891635 B1 | 13-02-2018 | KEINE | |
| WO 2005124493 A1 | 29-12-2005 | JP 2006003943 A<br>WO 2005124493 A1 | 05-01-2006<br>29-12-2005 |

Für nähere Einzelheiten zu diesem Anhang : siehe Amtsblatt des Europäischen Patentamts, Nr.12/82

EPO FORM P0461